# EUROPÄISCHE PATENTSCHRIFT

(11) **EP 2 798 987 B1**
(45) Veröffentlichungstag und Bekanntmachung des Hinweises auf die Patenterteilung: **08.08.2018**
(21) Anmeldenummer: 14164127.4
(22) Anmeldetag: 10.04.2014
(51) Int. Cl.: A47J 31/44

(54) **Verfahren und Vorrichtung zur Erzeugung von Milchprodukten, insbesondere Milchschaum**
Method and apparatus for producing milk products, in particular milk foam
Procédé et dispositif de production de produits laitiers, notamment de mousse de lait

(30) Priorität: 29.04.2013 DE 102013104339
(43) Veröffentlichungstag der Anmeldung: 05.11.2014
(73) Patentinhaber: Melitta Professional Coffee Solutions GmbH & Co. KG, 32429 Minden (DE)
(72) Erfinder: Buchholz, Bernd, 32369 Rahden (DE); Diester, Thomas, 31675 Bückeburg (DE)
(74) Vertreter: Specht, Peter

(56) Entgegenhaltungen:
- EP-A1- 1 857 028
- EP-A1- 2 298 142
- EP-A1- 2 471 423
- DE-A1-102011 108 810
- DE-C1- 19 719 784

## Beschreibung

Die Erfindung betrifft ein Verfahren und eine Vorrichtung zur Erzeugung von Milchprodukten, insbesondere Milchschaum.

Derartige Verfahren und Vorrichtungen sind aus dem Stand der Technik in verschiedensten Ausführungsformen bekannt. Sie bilden in der Regel einen Teil eines Kaffeevollautomatens, wie in der EP 1 312 292 B1 oder der EP 2 042 063 A1 beschrieben. Derart ist ein Variieren der Schaumeigenschaften aber nur sehr schwer möglich.

Eine Veränderung der Konsistenz des Milchschaums wird in der EP 2 298 142 A1 durch eine besondere Ansteuerung und Anordnung von Luftventilen erreicht. Dies ist der Gegenstand des Anspruchs 1. Die Erzeugung von kaltem Milchschaum erfolgt, indem über eine saugseitig einer Pumpe angeordnete Luftleitung Luft zugeführt wird, und die Erzeugung von warmem Milchschaum erfolgt, indem über eine druckseitig einer Pumpe angeordnete Luftleitung Luft zugeführt wird. Die Veränderung der Konsistenz des Milchschaums erfolgt durch wiederholtes Ansteuern eines intermittierenden Luftventils zwischen zwei Zuständen, nämlich einem Zustand mit geringerem und einen Zustand mit höherem Luftdurchsatz.

Die Erfindung hat demgegenüber die Aufgabe, ein verbessertes Verfahren und eine verbesserte Vorrichtung zur Erzeugung von Milchschaum zu schaffen.

Die Erfindung erreicht diese Aufgabe in Hinsicht auf das Verfahren durch den Gegenstand des Anspruchs 1 und in Hinsicht auf die Vorrichtung durch den Gegenstand des Anspruchs 7.

Erfindungsgemäß können in einfacher Weise verschiedenste Milchprodukte, insbesondere Milchschaumqualitäten, erzeugt werden, so Milchschäume unterschiedlicher Temperatur (heiß oder kalt, im letzteren Fall ohne Dampfzufuhr) und Konsistenz (insbesondere in Hinsicht auf feinere oder größere Bläschen). Vorzugsweise wird dabei eine hinsichtlich der Drehzahl einstellbare Milchpumpe verwendet, so dass die Fördermenge in einfacher Weise einstellbar ist. Durch die Variation der Drehzahl kann zudem in einfacher Weise die Produkteigenschaft variiert werden, da sich die Drehzahl insbesondere auf die Druckverhältnisse in der Nachbehandlungsvorrichtung auswirken. Diese Milchprodukte können allein ausgegeben werden oder ggf., in Verbindung mit einem Kaffeegetränk.

Erfindungsgemäß können verschiedenste Milchprodukte, insbesondere sowohl kalte als auch warme Milchschäume, erzeugt werden. Werden warme Milchschäume erzeugt, ist es besonders vorteilhaft, dass das Zusetzen von Dampf zeitlich und örtlich nach dem Zusetzen von Luft erfolgt, so dass das jeweilige Zusetzen von Luft und Dampf jeweils optimiert erfolgen kann Es ist auch möglich, kalte oder heiße Milch weitgehend ohne Schaumbildung auszugeben, wenn die Parameter entsprechend verändert werden.

Mit der Erfindung ergibt sich auch der Vorteil, dass eine produktbezogene Einstellung der Schaumeigenschaften erfolgen kann und vorzugsweise auch eine insbesondere quasi stufenlose Einstellung der Schaumeigenschaften.

Nachfolgend wird die Erfindung unter Bezug auf die Zeichnung anhand eines Ausführungsbeispiels näher beschreiben. Es zeigt:
- Fig. 1: eine schematische Darstellung des Aufbaus einer erfindungsgemäßen Vorrichtung;
- Fig. 2: eine Nachbehandlungsvorrichtung zum Verändern der Konsistenz von Milchschaum;
- Fig. 3: einen Homogenisator der Nachbehandlungsvorrichtung.;
- Fig. 4:: in a) bis c) Ansichten einer Auslassvorrichtung einer Kaffeemaschine;
- Fig. 5: in a) und b) Ansichten einer Vorrichtung zum Einbringen von Luft im Folgenden als Ringstrahldüse bezeichnet

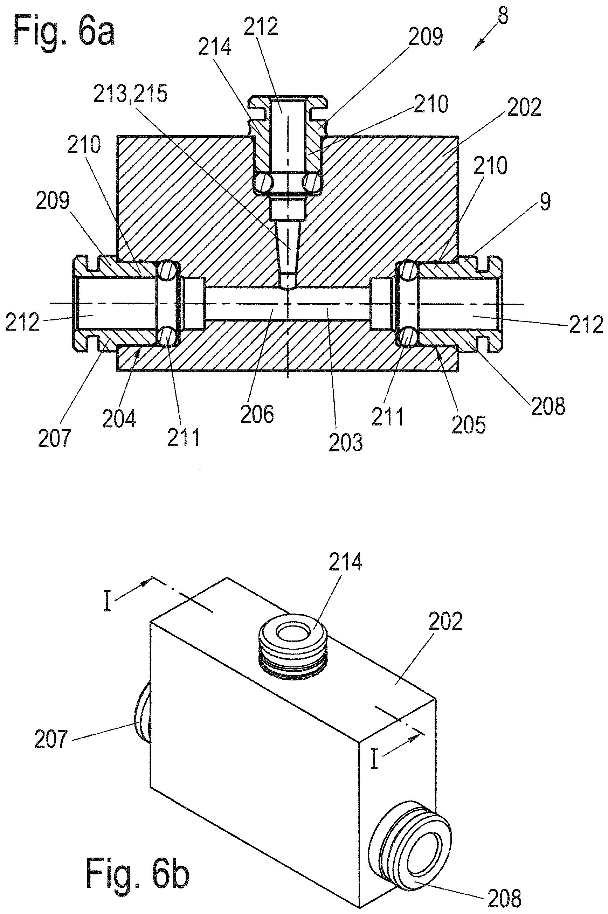

- Fig. 6: in a) und b) Ansichten einer Vorrichtung zum Eintrag von Dampf in eine Flüssigkeit im Folgenden mit Dampfstrahldüse bezeichnet

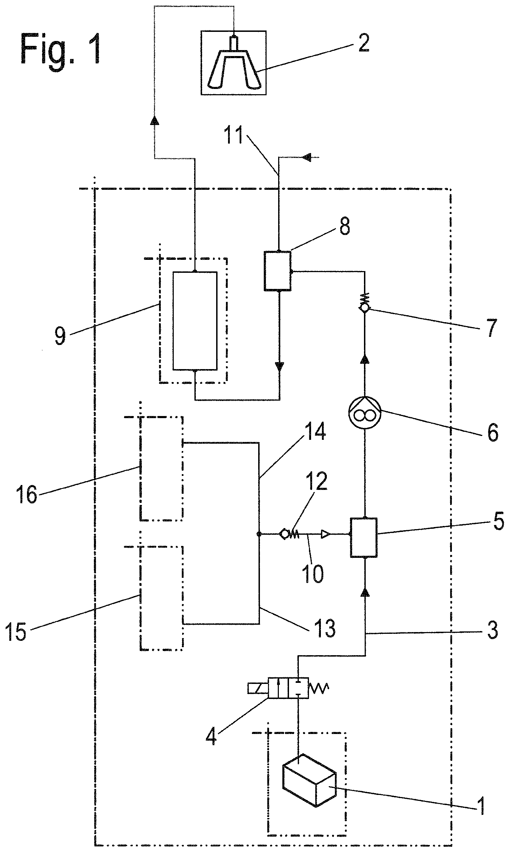

Die Vorrichtung (zumindest) zum Erzeugen eines Milchproduktes, insbesondere von Milchschaum, nach Fig. 1 weist vorzugsweise folgenden Aufbau auf.

Eine Milchleitung 3 verbindet einen Milchbehälter 1 und eine Auslassvorrichtung 2 miteinander. Dabei sind in die Milchleitung 3 zwischen den Milchbehälter 1 und die Auslassvorrichtung 2 in dieser Reihenfolge hier folgende Komponenten geschaltet: ein Absperrventil 4, eine erste Mischkammer 5, eine Milchpumpe 6, ein erstes Rückschlagventil 7, eine zweite Mischkammer 8 und eine Nachbehandlungsvorrichtung 9.

In die erste Mischkammer 6 mündet ferner eine Zuleitung 10, in die ein zweites Rückschlagventil 12 geschaltet ist, wobei sich die Zuleitung 10 vor dem zweiten Rückschlagventil 12 in zwei Zweigleitungen 13, 14 verzweigt. Die Zuleitung 10 wird vorzugsweise durch eine Düse mit verengtem Durchmesser in die Milchleitung in einem Ringkammerbereich münden, um die Luft vor dem Einleiten in die Milch zu beschleunigen (hier nicht dargestellt).

Die eine der Zweigleitungen 14 ist mit einer ersten Luftquelle 16 (einem atmosphärisch offenen Zugang, einer Luftpumpe oder einem Druckbehälter oder dgl.) verbunden und die andere der Zweigleitungen 13 ist mit einer zweiten Luftquelle 15 verbunden. Derart können je nach Einstellung über verschiedene Drosseldurchmesser in den beiden Zweigleitungen 13, 14 verschiedene Luftmengen angesaugt werden. Hierzu werden in die Zweigleitung vorzugsweise hier nicht dargestellte Ventile geschaltet. Dabei kann zwar die Luftmenge zwischen zwei Mengen variiert werden. Dies dient aber hauptsächlich einer Umstellung zwischen verschieden starken Luftzufuhrmengen bei kaltem oder warmem Milchprodukt, insbesondere Milchschaum. Die Einstellung der Schaumqualität erfolgt aber grundsätzlich nicht über die Luftmenge sondern vorteilhaft über eine Variation der Drehzahl der Milchpumpe 6. Denn es hat sich gezeigt, dass derart die Produktqualität besonders gut und gleichbleibend einstellbar ist.

In die zweite Mischkammer 8 mündet ferner eine Dampfzuleitung 11, durch die Heißdampf aus einer Heißdampfquelle (hier nicht dargestellt) in die Milchleitung 2 geleitet werden kann.

Die Funktion dieser Vorrichtung sei nachfolgend näher erläutert.

Mittels der in die Milchleitung geschalteten Milchpumpe 6 wird Milch aus dem Milchbehälter 1 zum Auslass 2 gefördert. Dieses Fördern erfolgt vorzugsweise während der Dauer der Milchschaumerzeugung kontinuierlich. Vorzugsweise wird eine Milch insbesondere mit einem Fettgehalt von weniger als 10%, vorzugsweise weniger als 7,5%, besonders vorzugsweise weniger als 5% verarbeitet.

Dabei wird das Absperrventil 4 zunächst von der dargestellten Sperrstellung in seine Durchlassstellung geschaltet.

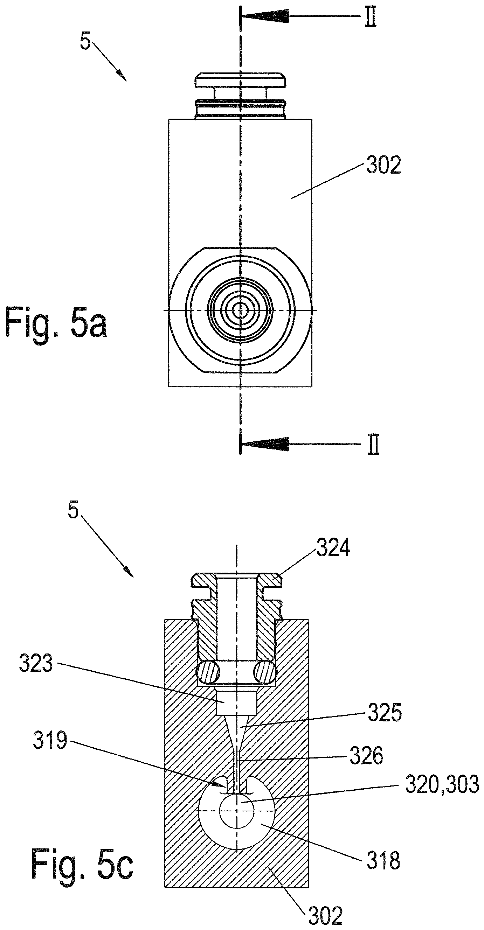

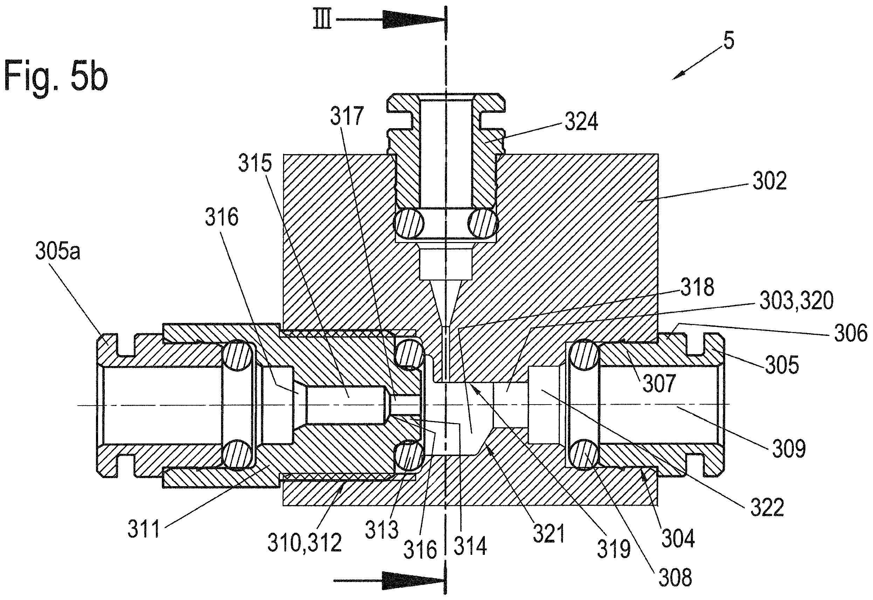

Die Milch wird sodann aus dem Milchbehälter 1 durch die Milchleitung 3 in die erste Mischkammer 5 gefördert. In der ersten Mischkammer 5 - in einfacher Form beispielsweise nach Art eines T-Stückes mit einer im Durchmesser vergrößerten Mischkammerbereich ausgestaltet (ein Ausführungsbeispiel besonders bevorzugter und vorteilhafter Art zeigt Fig. 5) - wird in die durch die Milchleitung 2 strömende Milch Luft geleitet, derart, dass sich die Milch mit der zuströmenden Luft zu einer schaumartigen Milch-Luft-Emulsion vermischt.

Vorzugsweise sind in die Zweigleitung 10 Vorrichtungen wie ein Absperrventil, eine oder mehrere Drosseln und/oder dgl. geschaltet, um die Luftzufuhr zu definieren, starten und unterbrechen zu können. Eine feste Drossel bietet den Vorteil, dass stets eine genau definierte Luftmenge zugegeben wird. Drosseln sind dem Fachmann an sich bekannt und werden daher hier nicht dargestellt). Es ist denkbar, zwischen zwei Drosseln bzw. Drosselkonfigurationen die Luftzufuhr umschalten zu können (Luftquellen 15, 16).

Vorzugsweise wird der durch die erste Mischkammer 5 strömenden Milch während der Milchschaumerzeugung kontinuierlich in einer konstanten Menge Luft durch ein Ansaugen mit der Milchpumpe 6 zugesetzt, um eine Milch-Luft-Emulsion möglichst gleichbleibender Eigenschaft zu erzeugen.

Die in der ersten Mischkammer 5 erzeugte Milch-Luft-Emulsion wird weiter durch die Milchleitung 3 in und durch die Milchpumpe 6 gefördert, in welcher sie verdichtet wird. Vorzugsweise wird eine hinsichtlich der Fördermenge einstellbare Milchpumpe 6 verwendet. Derart ist es möglich, die Milchschaumeigenschaften wesentlich über die Fördermenge der Milchpumpe 6 zu beeinflussen, um verschiedene Schaumqualitäten zu erzeugen (beispielsweise in Hinsicht auf die Bläschengröße), die für verschiedene Kaffeespezialitäten wie Cappuccino oder Milchkaffee oder dgl. jeweils besonders geeignet sind.

Die aus der Milchpumpe 6 aus- und weiterströmende, verdichtete Milch-Luft-Emulsion wird durch eine Strecke, in welche die zweite Mischkammer 8 geschaltet ist gefördert. In der zweiten Mischkammer 8 (die beispielsweise wiederum nach Art eines T-Stückes ausgestaltet sein kann) wird der Milch-Luft-Emulsion ggf. aus der Leitung 11 zuströmender Heißdampf zugesetzt, um die Temperatur der Mich-Luft-Emulsion zu erhöhen (wenn dies erwünscht ist), um einen warmen/heißen Milchschaum zu erzeugen. Wird die Dampfzufuhr unterbunden oder sehr gering gehalten, wird ein kalter oder nahezu kalter Milchschaum erzeugt.

An die zweite Mischkammer 8 schließt sich ein Dekompressionsabschnitt der Milchleitung 3 an, der in die Nachbehandlungsvorrichtung mündet.

Der aus der zweiten Mischkammer 8 und dem Dekompressionsabschnitt ausströmende erwärmte Milchschaum könnte zwar bereits in ein Gefäß ausgegeben werden.

Vorzugsweise ist dies aber nicht der Fall sondern der Schaum wird zunächst in der Nachbehandlungsvorrichtung 9 nachbehandelt, um die Schaumqualität gezielt zu verändern.

Vorzugsweise ist diese Nachbehandlungsvorrichtung 9 als Homogenisator derart ausgebildet, dass der erwärmte Milchschaum aus der zweiten Mischkammer hinsichtlich seiner Eigenschaften "vergleichmässigt" wird. Das Nachbehandeln erfolgt vorzugsweise derart, dass die Bläschen des Milchschaumes verkleinert werden, indem sie einmal oder wiederholt auf Prallwände beispielsweise nach Art einer Kanal-Labyrinthstrecke auftreffen.

Die Art der Nachbehandlung ist dabei wiederum stark von der Förderleistung bzw. der Drehzahl der Milchpumpe 6 abhängig, also von dem Druck, mit welchem die Milchpumpe die erwärmte Luft-Milch-Emulsion bzw. den Milchschaum in die Nachbehandlungsvorrichtung hineinpumpt.

Vorzugsweise weist die Nachbehandlungsvorrichtung 9 einen Homogenisator 95 auf, der dazu vorgesehen ist, dass der Milchschaum 40 homogenisiert wird, so dass die Luftbläschen 41 verkleinert und gleichmäßiger in der Milch verteilt sind. Dieses Nachbehandeln erfolgt vorzugsweise derart, dass der Milchschaum 40 sowie die Luftbläschen 41 zumindest einmal oder wiederholt auf Prallflächen 971 auftreffen.

Die Art und Intensität der Nachbehandlung ist dabei besonders von der Förderleistung bzw. der Drehzahl der Milchpumpe 6 abhängig, also von dem Druck, mit welchem die Milchpumpe 6 den Milchschaum 40 in die Nachbehandlungsvorrichtung 9 hineinpumpt. Derart ist es möglich, die Milchschaumeigenschaften wesentlich über die Fördermenge der Milchpumpe 6 zu beeinflussen, um verschiedene Schaumqualitäten zu erzeugen (beispielsweise in Hinsicht auf die Bläschengröße), die für verschiedene Kaffeespezialitäten wie Cappuccino oder Milchkaffee oder dgl. jeweils besonders geeignet sind.

Aus der Nachbehandlungsvorrichtung 9 wird der homogenisierte Milchschaum 40 durch den Auslauf 2 in ein Gefäß (nicht gezeigt), beispielsweise in eine Tasse, ausgegeben.

Derart quasi im kontinuierlichen Betrieb erzeugter Milchschaum 40 weist eine einstellbare Schaumbeschaffenheit auf. So können erfindungsgemäß Milchschäume verschiedener Konsistenz erzeugt werden, die von sehr fein (mit sehr kleinen Luftbläschen 41) bis grob (mit im Vergleich dazu großen Luftbläschen 41), und von locker über cremig bis fest variieren.

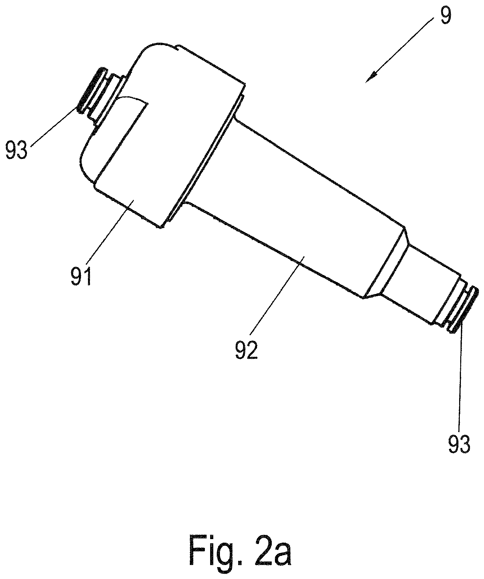

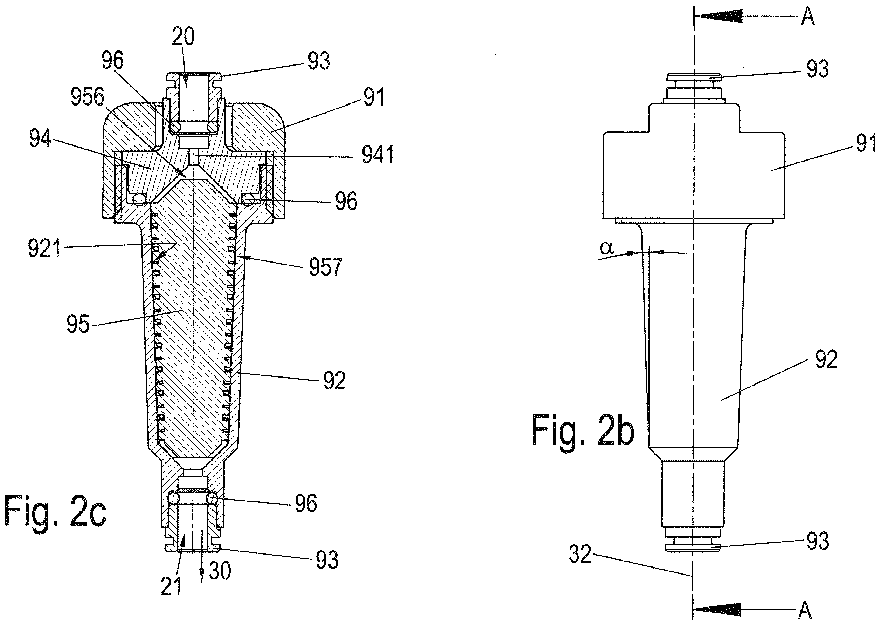

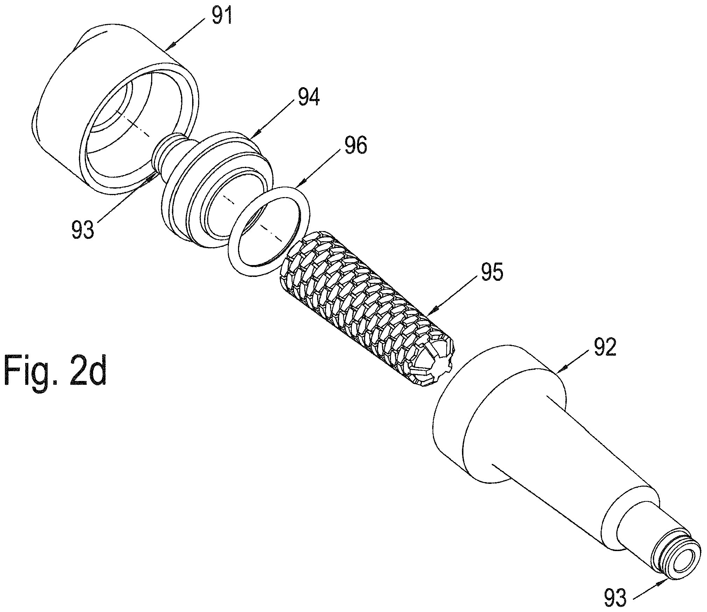

Fig. 2 zeigt die Nachbehandlungsvorrichtung 9 in verschiedenen Ansichten. In Fig. 2(a) ist eine perspektivische Ansicht gezeigt, in Fig. 2(b) eine Seitenansicht, in Fig. 2 (c) ein Schnitt A-A durch die Darstellung der Fig. 2 (b) und in Fig. 2(d) eine Explosionsansicht.

Die Nachbehandlungsvorrichtung 9 weist ein Gehäuse auf, das sich konzentrisch um eine Achse 30 erstreckt und aus einem Gehäuseoberteil 91 und einem Gehäuseunterteil 92 gebildet ist. Im Gehäuseunterteil 92 ist der Homogenisator 95 angeordnet. Im Gehäuseoberteil 91 ist ein Oberteil 94 mit einer Düse 941 vorgesehen. Das Gehäuseoberteil 91 sowie das Oberteil 94 weisen eine Durchgangsbohrung (nicht bezeichnet) auf, wobei im Oberteil 94 ein Anschlusseinsatz 93 vorgesehen ist, der als Einlassöffnung 20 für das Milch-/Luftgemisch 40 dient. Das Milch-/Luftgemisch 40 wird durch die Einlassöffnung 20 und die Düse 941 zum Homogenisator 95 geführt.

Durch den Druck, den das Milch-/Luftgemisch 40 auf den Homogenisator 95 ausübt, wird dieser gegen eine Gehäuseinnenwand 921 des Gehäuseunterteils 92 gedrückt. Dabei weist der Homogenisator 95 eine konische Form auf, so dass er sich in Erstreckungsrichtung 30 verjüngt. Und zwar weist er eine Außenwand 957 auf, die einen Winkel α von etwa 1 °- 5°, vorzugsweise 2°, zur Achse 32 aufweist. Hierdurch wird eine gute Dichtwirkung erreicht. Zudem wird das Milch-/Luftgemisch 40 beim Durchfließen des Homogenisators 95 beschleunigt.

Zudem weisen das Gehäuseunterteil 92 und seine Gehäuseinnenwand 921 eine zum Homogenisator 95 korrespondierende Form auf, und sind daher ebenfalls konisch geformt. Daher wird der Homogenisator 95 durch den vom Milch-/Luftgemisch 40 auf ihn wirkenden Druck zentriert und an die Gehäuseinnenwand 921 gepresst, so dass er formschlüssig an dieser anliegt. Daher kann das Milch-/Luftgemisch 40 nicht zwischen der Gehäuseinnenwand 921 und der Außenwand 957 des Homogenisators 95 vorbei fließen.

Die Außenwand 957 des Homogenisators 95 ist mit einem Kanallabyrinth 98 durchsetzt, durch das das Milch-/Luftgemisch 40 gedrückt wird. Dabei wird es homogenisiert, d. h. die Luftblasen im Milch-/Luftgemisch 40 werden verkleinert und gleichmäßig im Milch-/Luftgemisch 40 verteilt.

Nach dem Durchfließen des Homogenisators 95 wird das homogenisierte Milch-/Luftgemisch 40 durch eine Auslassöffnung 21 in einem Anschlusseinsatz 93, der in einer Durchgangsbohrung (nicht bezeichnet) des Gehäuseunterteils 92 angeordnet ist, aus der Nachbearbeitungsvorrichtung 9 ausgelassen.

Der einlassseitige Anschlusseinsatz 93 ist gegenüber dem Oberteil 94, das Oberteil 94 gegenüber dem Gehäuseunterteil 92 und der auslassseitige Anschlusseinsatz 93 gegenüber dem Gehäuseunterteil 92 mit Dichtringen 96 abgedichtet, so dass das Milch-/Luftgemisch 40 nicht in Zwischenräume (nicht bezeichnet) der Nachbearbeitungsvorrichtung 9 entweichen kann.

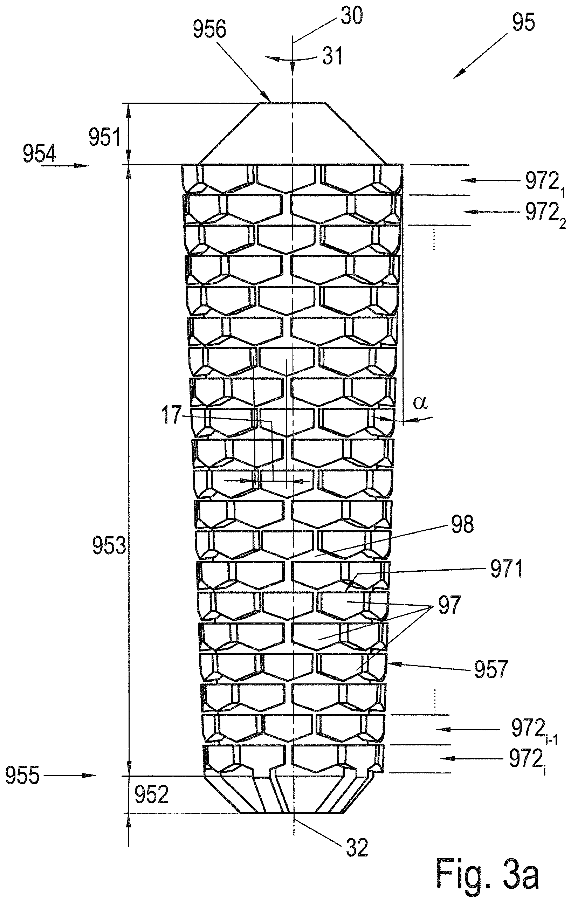

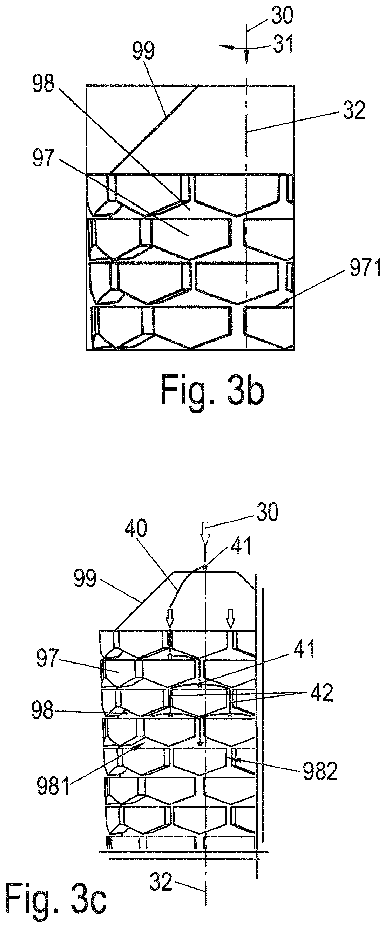

Die Fig. 3 zeigt in (a) eine detaillierte Seitenansicht des Homogenisators und in (b) und (c) jeweils einen Ausschnitt aus dem Homogenisator der Fig. 3(a).

Der Homogenisator 95 weist einen Einlassbereich 951 auf, der kegelstumpfförmig ausgebildet ist und sich daher in Erstreckungsrichtung 30 konisch verbreitert. Am einlassseitigen stumpfen Ende ist eine Eintrittsfläche 956 vorgesehen, auf die das Milch-/Luftgemisch 40 beim Einlassen auftrifft. Dann verteilt sich das Milch-/Luftgemisch 40 in Umfangsrichtung 31 gleichmäßig um eine durch die konische Form gebildete Rampe 99.

An den Einlassbereich 951 schließt sich ein Verkleinerungsbereich 953 an. Der Verkleinerungsbereich 953 weist die mit dem Kanallabyrinth 98 durchsetzte Außenwand 957 auf. Er ist ebenfalls konisch geformt, verjüngt sich aber in Erstreckungsrichtung 30.

An den Verkleinerungsbereich 953 schließt sich ein Auslassbereich 952 an, in dem der Homogenisator 95 kegelstumpfförmig geformt ist und sich noch weiter in Erstreckungsrichtung 30 verjüngt.

Im Verkleinerungsbereich 953 sind Prallkörper 97 vorgesehen, zwischen denen sich das Kanallabyrinth 98 erstreckt. Die Prallkörper 97 weisen jeweils eine Prallfläche 971 auf, auf die Teilströme 42 des Milchschaumes 40 jeweils beim Durchströmen des Kanallabyrinthes 98 aufprallen. An einer der Prallfläche 971 gegenüber liegenden Seite, das ist die in Erstreckungsrichtung 30 untere Seite der Prallkörper 97, verjüngen sich die Prallkörper 97 jeweils. In der hier gezeigten Ausführungsform sind die Prallkörper 97 dort dreieickförmig ausgebildet.

Es sind jeweils mehrere Prallkörper 97 in Umfangsrichtung 31 gleichmäßig verteilt nebeneinander in einer Reihe 972₁, 972₂ - 972ᵢ angeordnet. Zudem sind in Erstreckungsrichtung 30 untereinander mehrere Reihen 972₁, 972₂ - 972ᵢ mit Prallkörpern 97 vorgesehen. Die Prallkörper 97 derselben Reihe 972₁, 972₂ - 972ᵢ sind jeweils voneinander beabstandet, so dass zwischen ihnen ein Kanal 982 ausgebildet ist. Zudem sind die Prallkörper 97 der Reihen 972₁, 972₂ - 972ⱼ jeweils mittig zueinander versetzt. Der Versatz ist mit einem Doppelpfeil 17 gezeigt. Dadurch ist die Prallfläche 971 eines Prallkörpers 97 jeweils unterhalb eines Kanals 982 angeordnet.

Zudem ist dadurch jeweils oberhalb eines Prallkörpers 971 ein Aufprallraum 981 gebildet, der etwa dreieckförmig ausgebildet ist, und den Kanal 982 oberhalb der Prallfläche 971 des Prallkörpers 97 mit den beiden seitlich an den Prallkörper 97 angrenzenden Kanälen 982 verbindet.

Das Kanallabyrinth 98 umfasst daher eine Vielzahl von Aufprallräumen 981, die durch die Kanäle 982 miteinander verbunden sind.

Ein die Nachbearbeitungsvorrichtung 9 durchfließendes Milch-/Luftgemisch 40 tritt an der einlassseitigen oberen Seite 954 des Verkleinerungsbereiches 953 durch die zwischen den Prallkörpern 97 der in Erstreckungsrichtung 30 obersten Reihe 972₁ in das Kanallabyrinth 98 ein. Dabei wird es in etwa gleichgroße Teilströme 42 geteilt, die jeweils einen der Kanäle 982 der obersten Reihe 972₁ durchfließen.

Die Teilströme 42 treffen jeweils auf die unterhalb des Kanals 82 angeordnete Prallfläche 971 auf. Dabei werden nicht nur die Teilströme 42, sondern vor allem auch die Luftbläschen 41 geteilt. Die geteilten Teilströme 42 fließen dann jeweils durch die seitlich der Prallkörper 97, auf die sie aufgeprallt sind, angeordneten Kanäle 982. Dabei durchmischen sie sich mit den jeweils benachbarten geteilten Teilströmen 42 jeweils zu einem neuen, den Kanal 982 durchfließenden Teilstrom 42. Anschließend prallt dieser auf die nachfolgende Prallfläche 971 der in Erstreckungsrichtung 30 folgenden Reihe 972₁, 972₂ - 972ᵢ auf und wird geteilt, wobei auch die Luftbläschen 41 wieder geteilt werden. Dieser Vorgang wiederholt sich solange, bis das Milch-/Luftgemisch 40 die letzte, unterste Reihe 972ⱼ des Homogenisators 95 an seinem unteren, auslassseitigen Ende 955 durchflossen hat.

Im Auslassbereich 952 und beim Auslassen durch die Auslassöffnung 21 werden die homogenisierten Teilströme 42 wieder zusammengeführt.

Die Teilströme 42 werden unter hohem Druck durch das Kanallabyrinth 98 gedrückt. Der Druck ist abhängig von der Förderleistung der Milchpumpe 6 und über diese einstellbar. Die Luftbläschen 41 treffen mit einer Aufprallenergie auf die Prallfläche 971 auf, die so groß ist, dass sie sich beim Aufprall teilen. Aufgrund der konischen Form des Homogenisators 95 verringern sich die Flächenverhältnisse, und die Teilströme 42 werden beschleunigt. Dadurch ist die Aufprallenergie auch noch am in Erstreckungsrichtung 30 unteren Ende 955 ausreichend groß, um kleine Luftbläschen 41 beim Aufprall zu zerteilen.

Beim Durchfließen des Homogenisators 95 wird das Milch-/Luftgemisch 40 daher homogenisiert, indem die Luftbläschen 41 immer weiter verkleinert werden und das Milch-/Luftgemisch 40 immer weiter durchmischt wird.

Aus der Nachbehandlungsvorrichtung wird der nachbehandelte Milchschaum durch den Auslauf in ein Gefäß, beispielsweise in eine Tasse, ausgegeben.

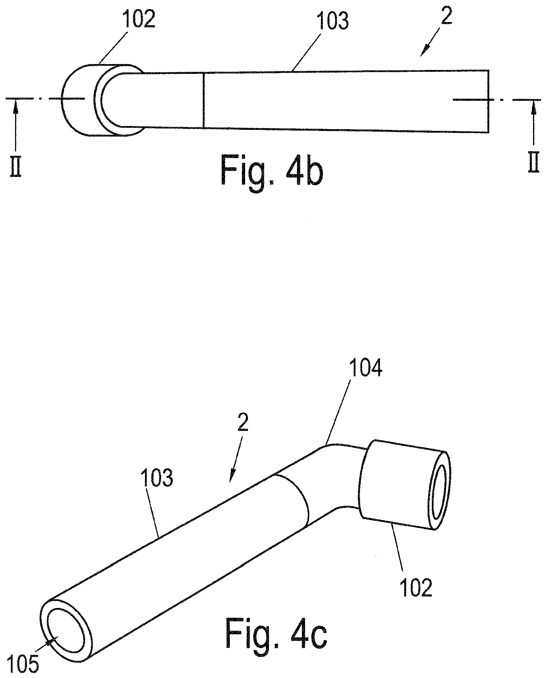

In Fig. 4b ist die Draufsicht der Auslassvorrichtung bzw. des Auslasses der zuvor beschriebenen Vorrichtung dargestellt, der gleichzeitig auch der Auslass einer übergeordneten Kaffeemaschine (nicht dargestellt) sein kann, insbesondere eines Kaffeevolltautomaten. Die Auslassvorrichtung 2 weist einen muffenartigen Kupplungsbereich 102 auf, mit dem die Auslassvorrichtung an die Maschine gekuppelt werden kann. Die Auslassvorrichtung 2 weist ferner einen Ausströmabschnitt 103 auf, dessen Außendurchmesser D und dessen Innendurchmesser "d" sich stromabwärts vergrößert/erweitert. Rein beispielhaft ist in Fig. 1 eine kegelförmige Erweiterung des Außendurchmessers D dargestellt. Die Auslassvorrichtung ist vorzugsweise einstückig aus einem Kunststoffwerkstoff in einem Urformprozess, z.B. durch Spritzgießen hergestellt.

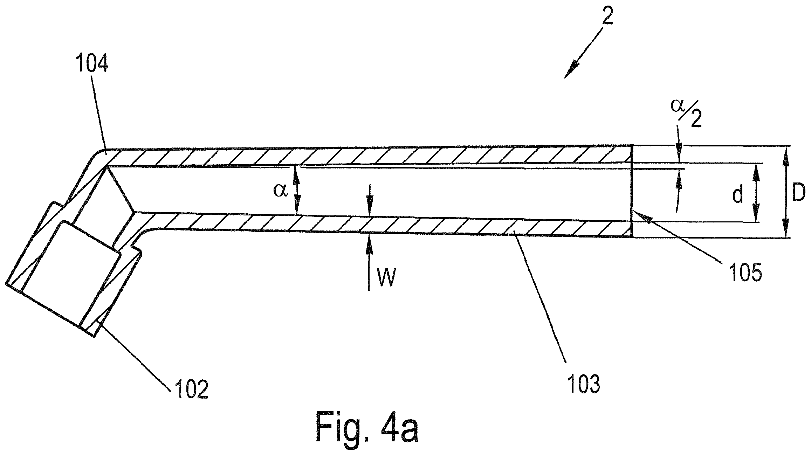

In Fig. 4a ist die Auslassvorrichtung 2 aus Fig. 4b im Schnitt dargestellt. Die Auslassvorrichtung 2 weist eine rohrförmige Grundgeometrie auf, so dass sie ein Getränkeprodukt, beispielsweise ein Kaffee- und/oder Milchprodukt wie beispielsweise den Milchschaum aus einer Milchschaumerzeugungsvorrichtung des Kaffeevollautomaten, aufnimmt und in einen bereitgestellten Getränkebehälter, wie z.B. eine Tasse leiten kann. Zwischen dem muffenartigen Kupplungsstück 102 und dem Ausströmabschnitt 103 weist die Auslassvorrichtung 2 einen Umlenkungsabschnitt 104 auf, der zur Richtungsumlenkung des strömenden Getränkeproduktes dient. Dies ist rein beispielhaft zu sehen, d.h. es ist auch möglich, dass die Auslassvorrichtung 2 mehrere Umlenkungsabschnitte 104 aufweist. Die Auslassvorrichtung 2 weist im Umlenkungsabschnitt 104 und insbesondere im Ausströmabschnitt 103 vorzugsweise eine konstante Wandstärke W auf. Daraus ergibt sich, dass auch der Innendurchmesser d des Ausströmabschnitts 103 ebenfalls stromabwärts kegelförmig erweitert ist. Wobei die kegelförmige Erweiterung des Innendurchmessers d rein beispielhaft zu verstehen ist. Sofern die Erweiterung des Innendurchmessers d kegelförmig ausgeführt ist, ist der Kegelwinkel α des stromabwärts kegelförmig erweiterten Ausströmabschnitts 103 zwischen 2° und 10° gewählt und beträgt besonders vorzugsweise 3° bis 6°, da sich derart besonders vorteilhafte Ergebnisse erzielen lassen. Die Länge des stromabwärts - hier kegelförmig- erweiterten - Teils des Ausströmabschnitts 103 ist zwischen 20 und 70 mm gewählt und beträgt vorzugsweise 30 bis 50 mm.

Die Auslassvorrichtung 2 ist vorzugsweise symmetrisch zum Automaten einer Kaffeemaschine, insbesondere eines Kaffeevolltautomaten, angeordnet, so dass dieser zwei Auslassvorrichtungen 1 aufweist.

Durch den stromabwärts -hier kegelförmig- erweiterten Innendurchmesser d des Ausströmabschnitts 103 wird erreicht, dass beim Ausströmen des Getränkeproduktes sich dieses an der Auslassöffnung 105 von der Auslassvorrichtung 2 sicher ablöst und zentrisch zur Auslassöffnung 105 aus der Auslassvorrichtung 2 fließt, ohne dabei seine definierten Parameter, wie Konsistenz bzw. Viskosität maßgeblich zu verändern bzw. ein Auslaufbild zu erzeugen, bei dem das Getränkeprodukt am Rand der Auslassöffnung 105 zunächst waagerecht strömt, so dass es einen bereitgestellten Getränkebehälter z.B. an seiner Außenseite unerwünschter Weise benetzen kann oder gar an dem bereitgestellten Getränkebehälter vorbei fließt, so dass sich ein unerwünschtes Auslaufbild ergibt und / oder die Konsistenz bzw. Viskosität des Getränkeproduktes unerwünscht verändert wird.

In Fig. 5a ist die bevorzugt eingesetzte Ringstrahldüse 5 dargestellt. Die Ringstrahldüse 5 weist hier einen rechteckigen Grundkörper 302 sowie eine in dieser Ansicht symmetrische Grundgeometrie auf.

In Fig. 5b ist die Ringstrahldüse 5 aus Fig. 5a in einer Vorderansicht im Schnitt dargestellt. Die Darstellung in Fig. 5a zeigt den in der Vorderansicht ebenfalls rechteckigen Grundkörper 302 .Der Grundköper 302 weist einen in Bezug auf die Zeichenblattebene waagerecht liegenden, durchgehenden (inneren) Milchkanal 303 auf, in den der Milchkanal 3 mündet. Das stromabwärts gelegene Ende 304 des Milchkanals 3 weist einen Steckeinsatz 305 auf. Der Steckeinsatz 305 ist in den aufgebohrten Teil des Milchkanals 3 am stromabwärts gelegenen Ende 304 des Milchkanals 3 eingepresst. Der Steckeinsatz 305 weist einen Kragen 306 auf, mit dem er sich gegen den Grundkörper 302 abstützt. Ferner weist der Steckeinsatze 305 einen Schaft 307 auf, der in das erweiterte bzw. aufgebohrte Ende 304 des Milchkanals 303 eintaucht. Dabei taucht der Schaft 307 nicht bis zum Grund des am Ende 304 aufgebohrten Milchkanal 303, sondert endet vorher.

Der Raum zwischen dem Schaftende und dem Bohrungsgrund weist eine Dichtung 308 auf, die hier beispielhaft als O-Ring ausgeführt ist. Der Steckeinsatz 305 weist ferner eine zentrische Durchgangsbohrung 309 auf, die konzentrisch zum Milchkanal 303 angeordnet ist.

Die Dichtung 308 ragt dabei in den lichten Durchmesser der Durchgangsbohrung 309 des Steckeinsatzes 305 und dichtet einen in die Durchgangsbohrung 309 des Steckeinsatzes 305 eingesteckten Schlauch (nicht dargestellt) oder eingesteckte Rohrleitung (nicht dargestellt) gegen die Umgebung ab. Gleichzeitig wirkt die Dichtung 308 als Fixierung und hält einen eingesteckten Schlauch bzw. eine eingesteckte Rohrleitung in Position, so dass dieser bzw. diese am Herausgleiten aus der Durchgangsbohrung 309 des Steckeinsatzes v5 gehindert wird.

Durch den Milchkanal 303 wird über die Durchgangsbohrung 309 des Steckeinsatzes 305 und die an ihm angeschlossenen Schläuche bzw. Rohrleitungen im Betrieb der Ringstrahldüse30 5 ein Milch-Luftgemisch aus der Ringstrahldüse 305 geleitet.

Am anderen Ende 310 des Milchkanals 33 ist hier beispielhaft ein Einschraubnippel 311 in eine Gewindebohrung 312 des Grundkörpers 302 eingeschraubt. Eine Dichtung 313 zwischen Gewindekernlochgrund und Schaftende des Einschraubnippels 311 dichtet den Milchkanal 303 gegen die Umgebung ab. Die Dichtung 313 wird dabei von einem Zentrieransatz 314 des Einschraubnippels 311 in Position gehalten und vorgespannt. In den Einschraubnippel 311 ist ein Steckeinsatz 305a eingepresst. Der Steckeinsatz 305a weist die gleiche Funktionalität und Geometrie auf, wie der Steckeinsatz 305. Aus diesem Grund wird auf eine detaillierte Beschreibung des Steckeinsatzes 305a verzichtet.

Der Einschraubnippel 311 weist ferner eine sich in Strömungsrichtung in mehreren, wenigstens zwei Stufen düsenartig verengende zentrische Bohrung 315 auf, die den Milchkanal 3 im Einschraubnippel 311 bildet. Die gestufte Bohrung 315 weist Übergänge 316 zwischen den Stufen auf. Die Übergänge 316 sind hier beispielhaft als kegelartige Übergänge 316 gestaltet. Es sind auch geometrisch anders ausgeprägte Übergänge 316 zwischen den Stufen möglich. Die Stufe der gestuften Bohrung 315 mit dem kleinsten Durchmesser ist als Milchdüse 317 ausgebildet.

Die Milchdüse 317 mündet in Strömungsrichtung in eine konzentrisch zur Milchdüse 317 liegende Mischkammer 318, zu der sich der Milchkanal 303 im Grundkörper 302 erweitert. Die Mischkammer 318 weist eine zylinderförmige Grundgeometrie auf. In Bezug auf die Zeichenblattebene senkrecht-vertikaler Richtung ragt ein Steg 319 in radialer Richtung in die Mischkammer 318. Vorzugsweise ragt er um mehr als 30% des Radius der Mischkammer am Ort der Bohrung 320 in diese radial hinein.

Der Steg ragt axial bis in oder an eine Bohrung 320, zu welcher sich die Mischkammer 318 in Strömungsrichtung düsenartig verengt. Der Steg kann auch axial genau mit dem Radius der Bohrung 320 abschließen. Dies ist in Hinsicht auf die Hygiene/Reinigung sehr vorteilhaft, da sich axial hinter dem Steg kein Totraum entsteht, in dem sich leicht Verunreinigungen ansammeln können

Zwischen der Mischkammer 318 und der Bohrung 320 ist ein -hier beispielhaftkegelförmig ausgeführter Übergang 321 erkennbar. Die Bohrung 320 mündet stromabwärts in eine Bohrung 322, deren Durchmesser mit dem der Durchgangsbohrung 309 des Steckeinsatzes 305 identisch ist.

Der Grundkörper 302 weist ferner einen in Bezug auf die Zeichenblattebene vertikalsenkrecht verlaufenden Luftkanal 323 auf, so dass der Milchkanal 303 und der Luftkanal 323 einen T-förmigen Leitungsverbund bilden. Der Luftkanal 323 weist einen Steckeinsatz 324 auf, wobei der Steckeinsatz 324 die gleiche Grundgeometrie aufweist, wie die Steckeinsätze 305, bzw. 305a des Milchkanals 303. Er unterscheidet sich von den Steckeinsätzen 305, bzw. 305a des Milchkanals lediglich in seinen Dimensionen, die insgesamt kleiner sind als die der Steckeinsätze 305, 305a des Milchkanals 303. Insofern wird auf die detaillierte Beschreibung des Steckeinsatzes 324 verzichtet, um Wiederholungen zu vermeiden.

Der Luftkanal 323 weist ferner einen Mittelabschnitt 324 auf, der sich in Strömungsrichtung düsenartig verengt. In dem Ausführungsbeispiel in Fig. 2 ist die düsenartige Verengung kegelförmig ausgeführt. Es sind aber auch andere geometrische Ausprägungen der düsenartigen Verengung möglich. Weiter stromabwärts mündet der Luftkanal 323 in Form einer Luftdüse 326, die im Wesentlichen im in die Mischkammer 318 ragenden Steg 319 verläuft, senkrecht in die Mischkammer 318 ein.

Durch den sich düsenartig verengenden Mittelabschnitt 325 des Luftkanals 323 wird im Betrieb der Ringstrahldüse 305 die im Luftkanal 323 fließende Luft komprimiert, beschleunigt und dosiert, was einen gleichmäßigen Luftmengeneintrag in die Mischkammer 318 unterstützt und das Ausbilden von unerwünschten Zweiphasensysteme verhindert.

Durch die gestufte Bohrung 315 des Milchkanals 303, die über eine Milchdüse 317 in die Mischkammer 318 mündet, wird der Milchstrom beschleunigt, so dass in der Mischkammer 318 durch Dekompression Turbulenzen im Milchstrom entstehen. Durch die Luftzufuhr über einen Steg 319, der radial in die Mischkammer 318 ragt, wird die durch den Luftkanal 323 strömende Luft in einen Bereich der Mischkammer 318 mit hoher Milchströmungsgeschwindigkeit dosiert zugegeben. Dadurch vermengen sich Luft und Milch in besonders vorteilhafter Weise, so dass ein homogener Milchschaum mit definierten Eigenschaften entsteht.

Fig. 5c zeigt den Luftkanal 323 in einer Seitenansicht im Schnitt. In Fig. 5c ist die zylindrische Grundgeometrie der Mischkammer 318 gut zu erkennen. Der Steg 319, der in die Mischkammer 318 ragt, weist eine pyramidenstumpfförmige Grundgeometrie auf. In Fig. 3 ist ferner gut zu erkennen, dass freie Halbmesser der Mischkammer 318 im Bereich des Steges 319 dem der Bohrung 320 entspricht, zu der sich die Mischkammer 318 in Strömungsrichtung düsenförmig verengt. Die Strömungswege des Milchkanals 333 sind geometrisch so gestaltet, dass eine automatische Reinigung des Milchkanals unterstützt wird. Dazu trägt insbesondere auch der pyramidenstumpfförmige Steg 319 bei.

In Fig. 5a ist schließlich eine bevorzugte Dampfstrahldüse 8 im Schnitt dargestellt. Die Dampfstrahldüse 8 weist einen rechteckigen Grundkörper 202 sowie eine symmetrische Grundgeometrie auf. Der Grundkörper 202 weist einen in Bezug auf die Zeichenblatteben horizontal verlaufenden Dampfkanal 203 auf. Der Dampfkanal 203 ist an seinen beiden Enden 204, 205 zweistufig erweitert bzw. aufgebohrt, so dass der Dampfkanal 203 an seinen Enden 204, 20 5 einen größeren Durchmesser aufweist als in seinem Mittelteil 206.

Die beiden Enden 204, 205 des Dampfkanals 203 weisen jeweils einen Steckeinsatz 207, 208 auf. Die Steckeinsätze 207, 208 sind jeweils in den aufgebohrten Teil der Dampfkanal 203 an den Enden 204, 205 des Dampfkanals 203 eingepresst. Die Steckeinsätze 207, 208 weisen jeweils einen Kragen 209 auf, mit dem sie sich jeweils gegen den Grundkörper 202 abstützen. Ferne weisen die Steckeinsätze 207, 208 jeweils einen Schaft 210 auf, der jeweils in das erweiterte bzw. aufgebohrte Ende 204, 205 der Dampfkanal 203 eintaucht. Dabei taucht der Schaft 210 jeweils nicht bis zum Grund der an den Enden 204, 205 aufgebohrten Dampfkanal 203, sondert endet vorher. Der Raum zwischen Schaftende und Bohrungsgrund weist eine Dichtung 211 auf, die hier beispielhaft als O-Ring ausgeführt ist. Die Steckeinsätze 207, 208 weisen ferner eine zentrische Durchgangsbohrung 212 auf, die konzentrisch zum Dampfkanal 203 angeordnet ist.

Die Verlängerung der Durchgangsbohrung 212 der Steckeinsätze 207, 208 bildet die erste Stufe der gestuften Erweiterung des Dampfkanals20 3. Die Dichtung 211 -hier beispielhaft als O-Ring ausgeführt- ragt dabei in den lichten Durchmesser der Durchgangsbohrung 212 der Steckeinsätze 207, 208 und dichtet einen in die Durchgangsbohrung 212 der Steckkontakte 207, 208 eingesteckten Schlauch (nicht dargestellt) oder eingesteckte Rohrleitung (nicht dargestellt) gegen die Umgebung ab. Gleichzeitig wirkt die Dichtung 211 als Fixierung und hält einen eingesteckten Schlauch bzw. eine eingesteckte Rohrleitung in Position, so dass dieser bzw. diese am Herausgleiten aus der Durchgangsbohrung 212 der Steckeinsätze 207, 208 gehindert wird.

Durch die Dampfkanal 203 wird über die Durchgangsbohrungen 2012 der Steckeinsätze 207, 208 und die an ihnen angeschlossenen Schläuche bzw. Rohrleitungen im Betrieb der Dampfstrahldüse 8 Dampf geleitet.

Der Grundkörper 202 weist ferner einen konzentrisch zu seiner in Bezug auf die Zeichenblattebene vertikal-senkrechten Symmetrieachse verlaufenden Milchkanal 213 auf, so dass der Dampfkanal 203 und der Milchkanal 213 einen T-förmigen Leitungsverbund bilden. Der Milchkanal 213 ist in Bezug auf die Zeichenblattebene nach oben analog zum Dampfkanal 203 erweitert und weist ebenfalls einen Steckeinsatz 2014 auf. Der Steckeinsatz weist die gleiche Grundgeometrie auf, wie die Steckeinsätze 207, 208 des Dampfkanals 203, er unterscheidet sich von den Steckeinsätzen 207, 208 des Dampfkanals in seinen Dimensionen, die insgesamt kleiner sind als die der Steckeinsätze 207, 208 des Dampfkanals 203. Insofern wird auf die detaillierte Beschreibung des Steckeinsatzes 214 verzichtet, um Wiederholungen zu vermeiden.

Der Milchkanal 213 (in den der Kanal 3 mündet) weist ferner einen Mittelabschnitt 215 auf, der sich in Strömungsrichtung düsenartig verengt. In dem Ausführungsbeispiel in Fig. 1 ist die düsenartige Verengung kegelförmig ausgeführt. Es sind aber auch andere geometrische Ausprägungen der düsenartigen Verengung möglich. Weiter stromabwärts mündet der Milchkanal 213 in Form eines zylindrischen Abschnitts 16 senkrecht in den Dampfkanal 203 ein.

Durch den sich düsenartig verengenden Mittelabschnitt 2015 des Milchkanals 13 wird im Betrieb der Dampfstrahldüse 8 ein dem Dampfkanal 320 mit definiertem Volumenstrom zufließendes Milchprodukt -beispielsweise ein Gemisch aus aufgebrühten Kaffee und Milchschaum- beschleunigt. Durch den konstanten Durchmesser des Mittelteils 206 des Dampfkanals 203 ohne eine Bremszone -wie sie z.B. eine herkömmliche Mischkammer darstellt- mit konstant hoher und gleichmäßiger Strömungsgeschwindigkeit fließenden Dampfs wird das durch den Milchkanal 213 zufließende Milchprodukt zunächst komprimiert. Anschließend wird das Milchprodukt gleichmäßig dosiert dem Dampfstrom im Dampfkanal 203 zugeführt und dabei mit dem Dampf vermischt und erfährt dadurch eine gleichmäßige Erwärmung durch den Dampf, ohne dabei zur Bildung von unerwünschten Zwei-Phasensystemen zu neigen

**Bezugszeichen**

| | |
|---|---|
| Milchbehälter | 1 |
| Auslassvorrichtung | 2 |
| Milchleitung | 3 |
| Absperrventil | 4 |
| erste Mischkammer | 5 |
| Milchpumpe | 6 |
| Rückschlagventil | 7 |
| Zweite Mischkammer | 8 |
| Nachbehandlungsvorrichtung | 9 |
| Gehäuseoberteil | 91 |
| Gehäuseunterteil | 92 |
| Gehäuseinnenwand | 921 |
| Anschlusseinsatz | 93 |
| Oberteil | 94 |
| Düse | 941 |
| Homogenisator | 95 |
| Einlassbereich | 951 |
| Auslassbereich | 952 |
| Verkleinerungsbereich | 953 |
| Einlassende | 954 |
| Auslassende | 955 |
| Eintrittsfläche | 956 |
| Außenwand | 957 |
| Dichtung | 96 |
| Prallkörper | 97 |
| Prallfläche | 971 |
| Reihe | 972₁ - 972ᵢ |
| Kanallabyrinth | 98 |
| Prallraum | 981 |
| Durchlaufkanal | 982 |
| Rampe | 99 |
| | |
| Zuleitung | 10 |
| Dampfzuleitung | 11 |
| Rückschlagventil | 12 |
| Zweigleitungen | 13, 14 |
| Luftquelle | 15 |
| Luftquelle | 16 |
| Versatz | 17 |
| | |
| Einlass | 20 |
| Auslass | 21 |
| Erstreckungs-, Strömungsrichtung | 30 |
| Umfangsrichtung | 31 |
| Achse | 32 |
| Milch-/Luftgemisch | 40 |
| Luftbläschen | 41 |
| Teilstrom | 42 |
| | |
| Kupplungsbereich | 102 |
| Ausströmabschnitt | 103 |
| Umlenkungsabschnitt | 104 |
| Auslassöffnung | 105 |
| Milchaufschäumvorrichtung | 106 |
| | |
| Grundkörper | 202 |
| Dampfkanal | 203 |
| Ende | 204 |
| Ende | 205 |
| Mittelteil | 206 |
| Steckeinsatz | 207 |
| Steckeinsatz | 208 |
| Kragen | 209 |
| Schaft | 210 |
| Dichtung | 211 |
| Durchgangsbohrung | 212 |
| Milchkanal | 213 |
| Steckeinsatz | 214 |
| Mittelabschnitt | 215 |
| Grundkörper | 302 |
| Milchkanal | 303 |
| Ende | 304 |
| Steckeinsatz | 305 |
| Steckeinsatz | 305a |
| Kragen | 306 |
| Schaft | 307 |
| Dichtung | 308 |
| Durchgangsbohrung | 309 |
| Ende | 310 |
| Einschraubnippel | 311 |
| Gewindebohrung | 312 |
| Dichtung | 313 |
| Zentrieransatz | 314 |
| Gestufte Bohrung | 315 |
| Übergang | 316 |
| Milchdüse | 317 |
| Mischkammer | 318 |
| Steg | 319 |
| Bohrung | 320 |
| Übergang | 321 |
| Bohrung | 322 |
| Luftkanal | 323 |
| Steckeinsatz | 324 |
| Mittelabschnitt | 325 |
| Lüftdüse | 326 |
| Winkel | α |

## Patentansprüche

1. Verfahren zum Erzeugen von Milchschaum mit folgenden Schritten:
a. Fördern von Milch in einer Milchleitung mittels einer Milchpumpe (6),
b. Mischen von Milch und Luft in einer ersten Mischkammer zum Erzeugen einer Luft-Milch-Emulsion,
c. ggf. Zusetzen von Dampf zur Luft-Milch-Emulsion zum Erwärmen der Luft-Milch-Emulsion, wenn ein warmer Milchschaum erzeugt werden soll, vorzugsweise nach Schritt "b.",
**dadurch gekennzeichnet, dass**
d. in Schritt "a." eine zur Veränderung der Förder- und Pumpmenge hinsichtlich ihrer Drehzahl einstellbare Milchpumpe (6) zur Veränderung der Eigenschaften des Milchproduktes, und dabei zur Veränderung der Konsistenz des Milchschaums, über die Drehzahl der Milchpumpe, verwendet wird, wobei die Einstellung der Schaumqualität über eine Variation der Drehzahl der Milchpumpe erfolgt.

2. Verfahren nach Anspruch 1, **dadurch gekennzeichnet, dass** eine Einstellung der Schaumeigenschaften produktbezogen erfolgt.

3. Verfahren nach Anspruch 1 oder 2, **dadurch gekennzeichnet, dass** eine stufenlose Änderung der Konsistenz des Milchschaums während einer kontinuierlichen Ausgabe bzw. eines Produktbezugs erfolgt.

4. Verfahren nach Anspruch 1, 2 oder 3, **dadurch gekennzeichnet, dass** die Luft-Milch-Emulsion aus Schritt c) in einer als Homogenisator ausgebildeten Nachbehandlungsvorrichtung (9) nachbehandelt wird.

5. Verfahren nach Anspruch 4, **dadurch gekennzeichnet, dass** bei dem Nachbehandeln mit der Nachbehandlungsvorrichtung (9) ein Verkleinern der Luftbläschen in der Luft-Milchemulsion erfolgt.

6. Verfahren nach einem der vorstehenden Ansprüche, **dadurch gekennzeichnet, dass** mit einer fest eingestellten Luftquelle unterschiedliche Schaumkonsistenzen erzeugt werden können.

7. Vorrichtung zur Durchführung eines Verfahrens zum Erzeugen eines Milchschaums nach einem der Ansprüche 1 bis 6, die folgendes aufweist: eine Milchleitung (3), die einen Milchbehälter (1) und eine Auslassvorrichtung (2) miteinander verbindet, wobei in die Milchleitung (3) zwischen den Milchbehälter (1) und die Auslassvorrichtung (2) zumindest folgende Komponenten geschaltet sind: eine erste Mischkammer (5) zum Mischen von Milch und Luft zum Erzeugen einer Luft-Milch-Emulsion, eine Milchpumpe (6), und eine der ersten Mischkammer nachgeschaltete zweite Mischkammer (8) zum ggf. Erwärmen der Luft-Milchemulsion aus der ersten Mischkammer, **dadurch gekennzeichnet, dass** die Drehzahl der Milchpumpe (6) einstellbar ist.

8. Vorrichtung nach Anspruch 7, **dadurch gekennzeichnet, dass** durch Verändern der Drehzahl die Förderleistung der Milchpumpe einstellbar ist.

9. Vorrichtung nach Anspruch 7 oder 8, **dadurch gekennzeichnet, dass** der Milchpumpe (6) eine Nachbehandlungsvorrichtung (9) nachgeschaltet ist.

10. Vorrichtung nach Anspruch 9, **dadurch gekennzeichnet, dass** die Nachbehandlungsvorrichtung (9) eine Kanal-Labyrinthstrecke aufweist

11. Vorrichtung nach einem der vorstehenden Ansprüche 7 bis 10, **dadurch gekennzeichnet, dass** sich der Auslass (2) zum Ende hin konisch aufweitet.

12. Vorrichtung nach einem der vorstehenden Ansprüche 7 bis 11, **dadurch gekennzeichnet, dass** sie eine Ringstrahldüse (5) aufweist, die einen inneren Milchkanal (303) aufweist, der sich zu einer Mischkammer (318) erweitert, sowie einen Luftkanal (323) aufweist, **dadurch gekennzeichnet, dass** der Luftkanal (323) durch einen Steg (319) geführt ist und der Steg (319) radial in die Mischkammer (318) ragt.

13. Vorrichtung nach einem der vorstehenden Ansprüche 7 bis 12, **dadurch gekennzeichnet, dass** sie eine Dampfstrahldüse (8) aufweist, die wiederum einen Dampfkanal (203) und einen inneren Milchkanal (213) aufweist, **dadurch gekennzeichnet, dass** der Milchkanal (213) vorzugsweise senkrecht und ohne Ausbildung einer Mischkammer in den Dampfkanal (203) mündet.

## Claims

1. Method of producing milk foam, comprising the following steps:
a. conveying milk in a milk duct by means of a milk pump (6),
b. mixing milk and air in a first mixing chamber to produce an air-milk emulsion and
c. optionally adding steam to the air-milk emulsion to heat the air-milk emulsion if a warm milk foam is to be produced, preferably after step b,
**characterised in that**
d. in step a use is made of a milk pump (6), which is settable with respect to the rotational speed thereof in order to change the conveying and pumping quantity, for varying the characteristics of the milk product, and **in that** case for varying the consistency of the milk foam, by way of the rotational speed of the milk pump, wherein setting of the foam quality is carried out by way of a variation of the rotational speed of the milk pump.

2. Method according to claim 1, **characterised in that** setting of the foam characteristics is carried out with reference to product.

3. Method according to claim 1 or 2, **characterised in that** a stepless variation of the consistency of the milk foam is carried out during a continuous delivery or during obtaining a product.

4. Method according to claim 1, 2 or 3, **characterised in that** the air-milk emulsion from step c is subsequently processed in a downstream processing device (9) constructed as a homogeniser.

5. Method according to claim 4, **characterised in that** a reduction of the air bubbles in the air-milk emulsion is carried out in the downstream treatment by the downstream treatment device (9).

6. Method according to any one of the preceding claims, **characterised in that** different foam consistencies can be produced by a fixedly set air source.

7. Device for carrying out a method for producing a milk foam according to any one of claims 1 to 6, which comprises the following: a milk duct (3), which connects a milk container (1) and an outlet device (2) together, wherein at least one of the following components is connected in the milk duct (3) between the milk container (1) and the outlet device (2): a first mixing chamber (5) for mixing milk and air to produce an air-milk emulsion, a milk pump (6), and a second mixing chamber (8), which is downstream of the first mixing chamber, for optional heating of the air-milk emulsion from the first mixing chamber, **characterised in that** the rotational speed of the milk pump (6) is settable.

8. Device according to claim 7, **characterised in that** the conveying performance of the milk pump is settable by varying the rotational speed.

9. Device according to claim 7 or 8, **characterised in that** a downstream processing device (8) is connected downstream of the milk pump (6).

10. Device according to claim 9, **characterised in that** the downstream processing device (9) has a channel labyrinth path.

11. Device according to any one of the preceding claims 7 to 10, **characterised in that** the outlet (2) conically widens towards the end.

12. Device according to any one of the preceding claims 7 to 11, **characterised in that** it comprises an annular spray nozzle (5) having an inner milk channel (303), which widens into a milk chamber (318), as well as has an air channel (323), **characterised in that** the air channel (323) is led through a web (319) and the web (319) protrudes radially into the mixing chamber (318).

13. Device according to any one of the preceding claims 7 to 12, **characterised in that** it comprises a steam spray nozzle (8) which in turn has a steam channel (203) and an inner milk channel (213), **characterised in that** the milk channel (213) preferably opens perpendicularly and without formation of a mixing chamber into the steam channel (203).

## Revendications

1. Procédé d'obtention de mousse de lait comprenant des étapes consistant à :
a. refouler du lait dans une conduite de lait au moyen d'une pompe à lait (6),
b. mélanger du lait et de l'air dans une première chambre de mélange pour obtenir une émulsion air-lait,
c. le cas échéant, ajouter de la vapeur à l'émulsion air-lait pour chauffer cette émulsion lorsqu'une mousse de lait chaude doit être obtenue, de préférence après l'étape "b",
**caractérisé en ce que**
d. lors de l'étape "a", on utilise une pompe à lait (6) dont la vitesse de rotation est réglable pour modifier la quantité de lait refoulée et pompée de façon à modifier les caractéristiques du produit laitier et ainsi pour modifier la consistance de la mousse de lait du fait de la vitesse de rotation de la pompe à lait, le réglage de la qualité de la mousse s'effectuant par variation de la vitesse de rotation de la pompe à lait.

2. Procédé conforme à la revendication 1,
**caractérisé en ce que**
l'on effectue un réglage des caractéristiques de la mouse en fonction du produit.

3. Procédé conforme à la revendication 1 ou 2,
**caractérisé en ce que**
l'on modifie en continu la consistance de la mousse de lait lors d'une délivrance continue ou selon le produit.

4. Procédé conforme à la revendication 1, 2 ou 3,
**caractérisé en ce que**
l'émulsion air-lait provenant de l'étape c) est soumise à un traitement ultérieur dans un dispositif de post traitement (9) réalisé sous la forme d'un homogénéiseur.

5. Procédé conforme à la revendication 4,
**caractérisé en ce que**
lors du traitement ultérieur à l'aide du dispositif de post traitement (9) on fragmente les petites bulles d'air dans l'émulsion air-lait.

6. Procédé conforme à l'une des revendications précédentes,
**caractérisé en ce que**
l'on peut obtenir différentes consistances de mousse avec une source d'air réglée de façon fixe.

7. Dispositif permettant la mise en oeuvre d'un procédé d'obtention d'une mousse de lait conforme à l'une des revendications 1 à 6, comprenant :
une conduite de lait (3) qui relie un réservoir de lait (1) et un dispositif de sortie (2),
dans cette conduite de lait (3) et entre le réservoir de lait (1) et le dispositif de sortie (2) étant montés au moins les composants suivants : une première chambre de mélange (5) permettant de mélanger du lait et de l'air pour permettre d'obtenir une émulsion air-lait, une pompe à lait (6) et une seconde chambre de mélange (8) montée en aval de la première chambre de mélange pour permettre le cas échéant de chauffer l'émulsion air-lait sortant de la première chambre de mélange,
**caractérisé en ce que**
la vitesse de rotation de la pompe à lait (6) est réglable.

8. Dispositif conforme à la revendication 7,
**caractérisé en ce que**
la puissance de refoulement de la pompe à lait peut être réglée en modifiant sa vitesse de rotation.

9. Dispositif conforme à la revendication 7 ou 8,
**caractérisé en ce qu'**
un dispositif de post traitement (9) est monté en aval de la pompe à lait (6).

10. Dispositif conforme à la revendication 9,
**caractérisé en ce que**
le dispositif de post traitement (9) comporte un canal en forme de labyrinthe.

11. Dispositif conforme à l'une des revendications précédentes 7 à 10,
**caractérisé en ce que**
la sortie (2) s'élargit coniquement à son extrémité.

12. Dispositif conforme à l'une des revendications précédentes 7 à 11,
**caractérisé en ce qu'**
il comporte une buse à jet annulaire (5) comprenant un canal de lait interne (303) qui s'élargit vers une chambre de mélange (318) ainsi qu'un canal d'air (323), et
**en ce que**
le canal d'air (323) passe au travers d'une barrette (319) qui pénètre radialement dans la chambre de mélange (318).

13. Dispositif conforme à l'une des revendications précédentes 7 à 12,
**caractérisé en ce qu'**
il comporte une buse à jet de vapeur (8) qui comporte également un canal de vapeur (203) et un canal de lait interne (213), et
**en ce que** le canal de lait (213) débouche de préférence perpendiculairement et sans former de chambre de mélange dans le canal de vapeur (203).
